# EUROPEAN PATENT APPLICATION

(11) **EP 4 818 257 A1**
(43) Date of publication of application: **07.10.2026**
(21) Application number: 24897419.8
(22) Date of filing: 20.11.2024
(51) Int. Cl.: C08L 65/00, B29B 7/00, B29B 9/06, C08J 3/20, C08J 5/00, C08K 3/013, C08K 3/22, C08K 3/34, C08L 45/00, C08L 91/06

(54) **RESIN COMPOSITION, MOLDED BODY, AND METHOD FOR PRODUCING RESIN COMPOSITION**

(30) Priority: 27.11.2023 JP 2023200133
(71) Applicant: Zeon Corporation, Tokyo 100-8246 (JP)
(72) Inventor: ARIURA, Nozomi, Tokyo 100-8246 (JP); CHIBA, Daido, Tokyo 100-8246 (JP); YOKOZEKI, Sho, Ogaki-city, Gifu 503-2213 (JP)
(74) Representative: Maiwald GmbH
(86) International application number: PCT/JP2024/041192
(87) International publication number: WO 2025/115733

(57) **Abstract**

A resin composition contains a polymer including a structural unit derived from a norbornene-based monomer and a filler composition. The filler composition contains a plate-like filler and a binder and has a weight loss of 1.4% or less in a 280°C nitrogen atmosphere.

## Description

### TECHNICAL FIELD

The present disclosure relates to a resin composition, a shaped product, and a method of producing a resin composition.

### BACKGROUND

Fillers are conventionally compounded in resin compositions that serve as materials of shaped products with the aim of reinforcing and/or imparting various functions to such shaped products.

For example, Patent Literature (PTL) 1 discloses a polypropylene-based resin composition having high rigidity and excellent heat resistance that contains a polypropylene-based resin, a filler in a specific proportion, and a filler dispersant and/or filler binder.

PTL 2 discloses a thermoplastic polymer granulated product having excellent handleability and safety that contains a powdered thermoplastic polymer in a specific proportion, a filler, and a binder.

PTL 3 discloses a thermally conductive resin composition that is electrically insulating and that contains a thermoplastic resin, a particulate material obtained through granulation of fibers having alumina as a main component, and an aromatic compound having a specific physical property. Moreover, according to PTL 3, it is possible to produce a shaped product having high thermal conductivity and electrical insulation suitable for an electrical/electronic component, and also having excellent mechanical strength, by using this resin composition.

PTL 4 discloses a thermoplastic resin composition having an excellent balance of physical properties that contains a thermoplastic resin and, in a specific proportion, a granular inorganic filler composed of an inorganic filler and a water-soluble polyester resin binder.

### CITATION LIST

### Patent Literature

PTL 1: JP2023-54403A
PTL 2: JP2023-15826A
PTL 3: JP2009-57409A
PTL 4: JP2007-284502A

### SUMMARY

### (Technical Problem)

An object of the present disclosure is to provide a resin composition having excellent external appearance of produced pellets, a shaped product obtained using this resin composition, and a method of producing this resin composition.

### (Solution to Problem)

The inventors conducted diligent investigation with the aim of solving the problem set forth above. The inventors reached a new finding that in the case of a resin composition that contains a polymer including a structural unit derived from a norbornene-based monomer (hereinafter, also referred to as a "norbornene-based polymer") and a filler composition, it is possible to reduce the amount of gas released during heated kneading and form pellets having excellent external appearance in a situation in which the filler composition contains a plate-like filler and a binder and has a weight loss of 1.4% or less in a 280°C nitrogen atmosphere, and, in this manner, the inventors completed the present disclosure.

Specifically, the present disclosure is aimed at advantageously solving the problem set forth above, and, according to the present disclosure, resin compositions according to the following [1] to [7], shaped products according to the following [8] to [13], and production methods according to the following [14] to [20] are provided.
[1] A resin composition comprising: a polymer including a structural unit derived from a norbornene-based monomer; and a filler composition, wherein the filler composition contains a plate-like filler and a binder and has a weight loss of 1.4% or less in a 280°C nitrogen atmosphere.

By using such a resin composition, it is possible to form pellets having excellent external appearance.

The term "norbornene-based monomer" as used in the present specification refers to a monomer having a norbornene skeleton.

The term "plate-like filler" as used in the present specification refers to a filler having two opposing main surfaces and having an aspect ratio of 13 or more, as calculated as a ratio of the maximum diameter of the main surfaces relative to the thickness (distance between the two main surfaces). The "two main surfaces" referred to here are two surfaces having a large area among surfaces of the filler. Moreover, the shape of the two main surfaces of the plate-like filler (i.e., the plan view shape of the plate-like filler) can be any shape. Furthermore, the two main surfaces may be flat surfaces or may be curved surfaces, and it is not necessary for the two main surfaces to each have the same shape.

The shapes of various types of fillers that are referred to in the present specification can be observed using an electron microscope.

The "weight loss" referred to in the present specification can be measured by a method described in the EXAMPLES section.

[2] The resin composition according to the foregoing [1], wherein the filler composition is a granular inorganic filler. When the filler composition is a granular inorganic filler, the external appearance of produced pellets can be even further improved.

[3] The resin composition according to the foregoing [1] or [2], wherein the binder includes at least one of paraffin wax and inorganic particles.

When the binder includes paraffin wax and/or inorganic particles, pellets having excellent external appearance can be obtained, and surface smoothness of a shaped product can be improved.

[4] The resin composition according to any one of the foregoing [1] to [3], wherein the plate-like filler includes at least one of boehmite and mica.

When the plate-like filler includes boehmite and/or mica, thermal dimensional stability of an obtained shaped product can be improved.

[5] The resin composition according to any one of the foregoing [1] to [4], wherein content of the filler composition or the granular inorganic filler is not less than 10 parts by mass and not more than 60 parts by mass when total mass of the polymer and the filler composition or the granular inorganic filler is taken to be 100 parts by mass.

By using a resin composition in which the content of the filler composition or the granular inorganic filler is within the range set forth above, it is possible to obtain pellets having excellent external appearance. This can also improve thermal dimensional stability of an obtained shaped product.

[6] The resin composition according to any one of the foregoing [1] to [5], further comprising a particulate filler.

By using a resin composition that contains a particulate filler in addition to the norbornene-based polymer and the filler composition or the granular inorganic filler, it is possible to perform processing such as coloring of the resin composition, and it is also possible to increase fluidity of the resin composition.

[7] The resin composition according to the foregoing [6], wherein a ratio of an average particle diameter of the particulate filler relative to an average particle diameter of the plate-like filler is 1/10 or less.

When the ratio of average particle diameter of particulate filler/average particle diameter of plate-like filler is not more than the value set forth above, it is possible to perform processing such as coloring of the resin composition, and it is also possible to further increase fluidity of the resin composition.

[8] A shaped product obtained through shaping of the resin composition according to any one of the foregoing [1] to [7].

A shaped product that is obtained through shaping of any one of the resin compositions set forth above has excellent surface smoothness and thermal dimensional stability.

[9] The shaped product according to the foregoing [8], wherein an MD linear expansion coefficient and a TD linear expansion coefficient of the shaped product are each 40 ppm/K or less.

A shaped product for which the MD and TD linear expansion coefficients are each not more than the value set forth above is preferable since it can be said to have excellent thermal stability.

Note that MD (Machine Direction) referred to in the present specification means a direction parallel to the flow of a resin composition during production of a shaped product, whereas TD (Transverse Direction) referred to in the present specification means a direction perpendicular to MD. Note that MD and TD can be defined through observation of a shaped product itself. For example, in a case in which a gate mark is confirmed in a shaped product having a roughly rectangular shape in plan view, the extension direction of a side where the gate mark is present in plan view of the shaped product can be defined as TD, and a direction perpendicular to TD can be defined as MD. Moreover, in a case in which a gate mark is confirmed in a shaped product having a roughly circular shape (lens shape, etc.), a tangential direction to the rough circle at the center of the gate mark in plan view of the shaped product can be defined as TD, and a direction perpendicular to TD can be defined as MD.

The "linear expansion coefficients" in MD and TD referred to in relation to a shaped product in the present specification can be measured by a method described in the EXAMPLES section.

[10] The shaped product according to the foregoing [8] or [9], wherein a ratio of an MD linear expansion coefficient relative to a TD linear expansion coefficient of the shaped product is not less than 0.8 and not more than 1.2.

A shaped product for which a ratio of MD linear expansion coefficient/TD linear expansion coefficient is within the range set forth above is preferable since it has little anisotropy of thermal dimensional stability.

[11] The shaped product according to any one of the foregoing [8] to [10], wherein water absorption of the shaped product after 24 hours of immersion in 23°C water as measured in accordance with ASTM D570 is 0.05 mass% or less.

A shaped product for which the water absorption described above is not more than the value set forth above is preferable since it has excellent water absorption resistance.

[12] The shaped product according to any one of the foregoing [8] to [11], wherein the shaped product has an arithmetic surface roughness Ra of 10 nm or less.

A shaped product having an arithmetic surface roughness Ra that is not more than the value set forth above is preferable since it has excellent surface smoothness.

The "arithmetic surface roughness Ra" of a shaped product referred to in the present specification can be measured by a method described in the EXAMPLES section.

[13] The shaped product according to any one of the foregoing [8] to [12], wherein the shaped product is for a mirror.

[14] A method of producing a resin composition comprising: kneading a plate-like filler and a binder to obtain a filler composition having a weight loss of 1.4% or less in a 280°C nitrogen atmosphere; and kneading a polymer including a structural unit derived from a norbornene-based monomer and the filler composition.

By using a resin composition obtained through such a production method, it is possible to obtain pellets having excellent external appearance. Moreover, by kneading the plate-like filler and the binder to obtain a filler composition, it is possible to improve kneading efficiency of the filler with the polymer and improve productivity.

[15] The method of producing a resin composition according to the foregoing [14], wherein the filler composition is a granular inorganic filler.

[16] The method of producing a resin composition according to the foregoing [14] or [15], wherein the binder includes at least one of paraffin wax and inorganic particles.

When the binder includes paraffin wax and/or inorganic particles, pellets having excellent external appearance can be obtained.

[17] The method of producing a resin composition according to any one of the foregoing [14] to [16], wherein the plate-like filler includes at least one of boehmite and mica.

When the plate-like filler includes boehmite and/or mica, the external appearance of obtained pellets can be even further improved.

[18] The method of producing a resin composition according to any one of the foregoing [14] to [17], wherein a kneaded amount of the filler composition or the granular inorganic filler is not less than 10 parts by mass and not more than 60 parts by mass when total mass of the polymer and the filler composition or the granular inorganic filler is taken to be 100 parts by mass.

By using a resin composition that has been produced with a content of the filler composition or the granular inorganic filler that is within the range set forth above, it is possible to further improve the external appearance of obtained pellets. This can also improve thermal dimensional stability of an obtained shaped product.

[19] The method of producing a resin composition according to any one of the foregoing [14] to [18], wherein a particulate filler is further added and kneaded in the kneading of the polymer and the filler composition or the granular inorganic filler.

By using a resin composition that has been produced through adding a particulate filler in addition to the norbornene-based polymer and the filler composition or the granular inorganic filler, it is possible to perform processing such as coloring of the resin composition, and it is also possible to increase fluidity of the resin composition.

[20] The method of producing a resin composition according to the foregoing [19], wherein a ratio of an average particle diameter of the particulate filler relative to an average particle diameter of the plate-like filler is 1/10 or less.

When the ratio of average particle diameter of particulate filler/average particle diameter of plate-like filler is not more than the value set forth above, it is possible to perform processing such as coloring of the resin composition, and it is also possible to further increase fluidity of the produced resin composition.

### (Advantageous Effect)

According to the present disclosure, it is possible to provide a resin composition having excellent external appearance of produced pellets, a shaped product obtained using this resin composition, and a method of producing this resin composition.

### DETAILED DESCRIPTION

The following provides a detailed description of embodiments of the present disclosure.

A presently disclosed resin composition and method of producing a resin composition can be used in production of a presently disclosed shaped product. Moreover, the presently disclosed shaped product can be used as a mirror that is incorporated into a projector, a head-up display, or the like, a lens casing or home appliance casing, a structural member such as a screw or bolt, or the like, for example, but is not specifically limited thereto. The presently disclosed shaped product can be used as an alternative to a glass, metal, or ceramic member as a result of having a stable shape.

### (Resin composition)

The presently disclosed resin composition is required to contain a norbornene-based polymer and a filler composition and may contain optional components as necessary.

As a result of the presently disclosed resin composition containing the norbornene-based polymer and the filler composition and as a result of the weight loss in a 280°C nitrogen atmosphere being 1.4% or less, the resin composition can be used to produce a shaped product having excellent external appearance of pellets.

### <Norbornene-based polymer>

The norbornene-based polymer is a polymer obtained through polymerization of a norbornene-based monomer that is a monomer having a norbornene skeleton or is a hydrogenated product of such a polymer.

The norbornene-based polymer may be a ring-opened polymer of a norbornene-based monomer, a ring-opened polymer of a norbornene-based monomer and another monomer that can be ring-opening copolymerized therewith, a hydrogenated product of either of these ring-opened polymers, an addition polymer of a norbornene-based monomer, an addition polymer of a norbornene-based monomer and another monomer that can be copolymerized therewith, or the like. Note that one norbornene-based polymer can be used individually, or two or more norbornene-based polymers can be used in combination.

The norbornene-based monomer may be bicyclo[2.2.1]hept-2-ene (commonly referred to as norbornene) or a derivative thereof (derivative having a substituent on a ring), tricyclo[4.3.0^{1,6}.1^{2,5}]deca-3,7-diene (commonly referred to as dicyclopentadiene) or a derivative thereof (derivative having a substituent on a ring), tetracyclo[9.2.1.0^{2,10}.0^{3,8}]tetradeca-3,5,7,12-tetraene (also referred to as methanotetrahydrofluorene or 1,4-methano-1,4,4a,9a-tetrahydrofluorene) or a derivative thereof (derivative having a substituent on a ring), tetracyclo[4.4.1^{2,5}.1^{7,10}.0]dodec-3-ene (commonly referred to as tetracyclododecene) or a derivative thereof (derivative having a substituent on a ring), or the like.

The substituent may be an alkyl group, an alkylene group, a vinyl group, an alkoxycarbonyl group, an alkylidene group, or the like.

Examples of norbornene-based monomers having a substituent include 8-methoxycarbonyl-tetracyclo[4.4.0.1^{2,5}.1^{7,10}]dodec-3-ene, 8-methyl-8-methoxycarbonyl-tetracyclo[4.4.0.1^{2,5}.1^{7,10}]dodec-3-ene, 8-ethylidene-tetracyclo[4.4.0.1^{2,5}.1^{7,10}]dodec-3-ene, and so forth, but are not limited thereto.

The other monomer that can be ring-opening copolymerized with the norbornene-based monomer may be a monocyclic cycloolefin-based monomer such as cyclohexene, cycloheptene, cyclooctene, or a derivative of any thereof (derivative having a substituent on a ring). Examples of such substituents include the same examples as given for a substituent of the norbornene-based monomer.

The other monomer that can be addition copolymerized with the norbornene-based monomer may be an α-olefin having a carbon number of 2 to 20 such as ethylene, propylene, 1-butene, 1-pentene, or 1-hexene or a derivative of any thereof (derivative having a substituent); a cycloolefin such as cyclobutene, cyclopentene, cyclohexene, or cyclooctene or a derivative of any thereof (derivative having a substituent on a ring); a non-conjugated diene such as 1,4-hexadiene, 4-methyl-1,4-hexadiene, 5-methyl-1,4-hexadiene, or 1,7-octadiene; or the like. Of these monomers, α-olefins are preferable, and ethylene is particularly preferable. Examples of such substituents include the same examples as given for a substituent of the norbornene-based monomer.

The ring-opened polymer of a norbornene-based monomer or the ring-opened polymer of a norbornene-based monomer and another monomer that can be ring-opening copolymerized therewith can be synthesized through polymerization of the monomer component(s) in the presence of a commonly known ring-opening polymerization catalyst.

The ring-opening polymerization catalyst may be a catalyst formed of a halide of a metal such as ruthenium or osmium, a nitric acid salt or acetylacetone compound, and a reductant or a catalyst formed of a halide of a metal such as titanium, zirconium, tungsten, or molybdenum or an acetylacetone compound and an organoaluminum compound.

The hydrogenated ring-opened polymer of a norbornene-based monomer can normally be obtained by adding a commonly known hydrogenation catalyst containing a transition metal such as nickel or palladium to a polymerization solution of the ring-opened polymer described above and hydrogenating carbon-carbon unsaturated bonds.

Note that the hydrogenation rate is preferably 90% or more, more preferably 95% or more, and even more preferably 99% or more.

The "hydrogenation rate" referred to in the present specification can be measured by a method described in the EXAMPLES section.

The addition polymer of a norbornene-based monomer or the addition polymer of a norbornene-based monomer and another monomer that can be copolymerized therewith can be synthesized through polymerization of the monomer component(s) in the presence of a commonly known addition polymerization catalyst. The addition polymerization catalyst may be a catalyst that is formed of a titanium, zirconium, or vanadium compound and an organoaluminum compound, for example.

From a viewpoint of improving heat resistance and rigidity of obtained pellets, the proportion in which norbornene-derived structural units are included in the norbornene-based polymer when all structural units included in the norbornene-based polymer are taken to be 100 mass% is preferably not less than 50 mass% and not more than 100 mass%, more preferably not less than 60 mass% and not more than 100 mass%, and even more preferably not less than 70 mass% and not more than 100 mass%.

The weight-average molecular weight (Mw) of the norbornene-based polymer is not specifically limited but is preferably 1,000 or more, more preferably 2,000 or more, even more preferably 10,000 or more, and particularly preferably 20,000 or more, and is preferably 1,000,000 or less, and more preferably 500,000 or less.

Moreover, the molecular weight distribution (Mw/Mn) of the norbornene-based polymer is not specifically limited but is preferably not less than 1 and not more than 4, and more preferably not less than 1.5 and not more than 3.5.

The "weight-average molecular weight (Mw)" and "number-average molecular weight (Mn)" of a polymer such as a norbornene-based polymer referred to in the present specification can be measured by a method described in the EXAMPLES section.

The proportion in which the norbornene-based polymer is contained in the presently disclosed resin composition is preferably 40 parts by mass or more, and more preferably 45 parts by mass or more per 100 parts by mass of the total mass of the polymer and the subsequently described filler composition, and is preferably 90 parts by mass or less, and more preferably 70 parts by mass or less per 100 parts by mass of the total mass of the polymer and the subsequently described filler composition. A shaped product having excellent thermal dimensional stability and also having little anisotropy of thermal dimensional stability can be obtained when the proportion in which the norbornene-based polymer is contained in the presently disclosed resin composition is not more than any of the upper limits set forth above, whereas formability of the resin composition is excellent when this proportion is not less than any of the lower limits set forth above.

### <Filler composition>

The filler composition is also referred to as a granular inorganic filler. The granular inorganic filler can be a granulated product of an inorganic filler serving as a plate-like filler and a binder. The following describes the filler composition as a granular inorganic filler.

The granular inorganic filler is required to contain a plate-like filler and a binder and may contain optional components as necessary. For example, a silane coupling agent having a vinyl group, an amino group, an epoxy group, an isocyanate group, or the like may be added as an optional component with the aim of improving dispersibility. In a case in which a silane coupling agent is added, the amount thereof when the mass of the plate-like filler is taken to be 100 parts by mass is preferably 0.01 parts by mass or more, preferably 0.1 parts by mass or more, and more preferably 1 part by mass or more, and is preferably 10 parts by mass or less, preferably 5 parts by mass or less, and more preferably 3 parts by mass or less. The addition of a silane coupling agent within any of these ranges can improve dispersibility of the plate-like filler in the resin. By using these materials, gas release during heated kneading can be reduced, and pellets having excellent shape stability described further below can be formed. Moreover, by kneading the plate-like filler and the binder to obtain a granular inorganic filler, it is possible to improve kneading efficiency of the filler with the polymer and improve productivity.

The weight loss of the granular inorganic filler in a 280°C nitrogen atmosphere is required to be 1.4% or less, and is preferably 0.75% or less, and more preferably 0.65% or less. The lower limit for the weight loss is not specifically limited and may be 0%. When the weight loss is not more than any of the upper limits set forth above, there is little release of outgas during kneading with the polymer, foaming at the surfaces of pellets can be suppressed, and external appearance of the pellets can be improved. Note that when the weight loss is not more than any of the upper limits set forth above, uniformity of dimensions of produced pellets (i.e., shape stability of the pellets) can be improved. This is because there is little release of outgas during kneading, which makes it possible to maintain a constant thickness of strands exiting from a kneading device and inhibit unintended severing of the strands. By subsequently cutting such strands to produce pellets and maintaining uniform dimensions of the produced pellets, it becomes easy to load a certain amount of the pellets into a shaping machine. Consequently, productivity in production of a shaped product improves.

In relation to external appearance and shape stability of pellets described above, conventional resin compositions have suffered from a problem of having hygroscopicity like a water-soluble substance. There has also been room for improvement in terms that the production of gas due to decomposition during processing at high temperature causes the formation of a foam-like form in a resin melt discharged from a kneading device, reduces productivity due to severing during strand production, and results in poor external appearance, such as non-uniform shape, of produced pellets.

Furthermore, when the weight loss is not more than any of the upper limits set forth above, this enables better releasability from a mold in a situation in which a shaped product such as a mirror is formed, for example.

The proportion in which the granular inorganic filler is contained in the presently disclosed resin composition when the total mass of the polymer and the granular inorganic filler is taken to be 100 parts by mass is preferably 10 parts by mass or more, and more preferably 30 parts by mass or more, and is preferably 60 parts by mass or less, and more preferably 55 parts by mass or less. When the proportion in which the granular inorganic filler is contained in the presently disclosed resin composition is within any of the ranges set forth above, gas release during heated kneading can be reduced, and pellets having even better shape stability can be obtained. This can also improve thermal dimensional stability of an obtained shaped product.

### <<Plate-like filler>>

The plate-like filler is a filler having an aspect ratio of 13 or more.

The average aspect ratio of the plate-like filler is preferably 15 or more, and more preferably 18 or more, and is preferably 80 or less, more preferably 75 or less, even more preferably 60 or less, further preferably 45 or less, and particularly preferably 30 or less. When the average aspect ratio of the plate-like filler is within any of the ranges set forth above, thermal dimensional stability of an obtained shaped product can be further improved.

Note that the "average aspect ratio" of a plate-like filler means the arithmetic mean diameter determined through observation using an electron microscope and, in more detail, can be measured by a method described in the EXAMPLES section.

The average particle diameter of the plate-like filler is preferably 1 µm or more, and more preferably 2 µm or more, and is preferably 30 µm or less, more preferably 20 µm or less, and even more preferably 10 µm or less. When the average particle diameter of the plate-like filler is within any of the ranges set forth above, thermal dimensional stability of an obtained shaped product can be further improved.

The plan view shape of the plate-like filler is not specifically limited as previously described. The plan view shape of the plate-like filler may, for example, be a polygonal shape, a circular shape, an elliptical shape, or a shape that is approximated by any of these shapes.

The plate-like filler preferably has a plan view shape that is hexagonal. It is sufficient for the plan view shape that is hexagonal to be a roughly hexagonal shape that is recognized as having 6 angles without limitation to a regular hexagon, and so long as the degree of anisotropy is small, the lengths of sides joining angles may differ, or one or more of these sides may be a curve, for example.

The plate-like filler is preferably an inorganic filler. From a viewpoint of even further improving the external appearance of obtained pellets, the plate-like filler is preferably boehmite or mica, for example, and is more preferably boehmite. One of these can be used individually, or two or more of these can be used in combination.

The proportion in which the plate-like filler is contained in the presently disclosed resin composition is preferably 91 parts by mass or more, and more preferably 95 parts by mass or more per 100 parts by mass of the granular inorganic filler, and is preferably 99 parts by mass or less, and more preferably 98 parts by mass or less per 100 parts by mass of the granular inorganic filler. When the proportion in which the plate-like filler is contained in the presently disclosed resin composition is within any of the ranges set forth above, gas release during heated kneading can be reduced, and pellets having even better shape stability can be obtained. This can also improve thermal dimensional stability of an obtained shaped product.

### <<Binder>>

The binder is not specifically limited and can, for example, include one or more selected from the group consisting of paraffin wax, inorganic particles, a metal soap, and a resin such as a polyacrylic acid-based resin or a stearic acid-based resin. Of these examples, the binder preferably includes at least one of paraffin wax and inorganic particles.

The paraffin wax is not specifically limited and can be paraffin wax having an initial decomposition temperature that is not lower than a kneading temperature with the polymer. For example, paraffin wax having an initial decomposition temperature of 280°C or higher, and, more specifically, HICALL^{®} K-350 (HICALL is a registered trademark in Japan, other countries, or both), LUVAX^{®}-2191 (LUVAX is a registered trademark in Japan, other countries, or both), or the like may be used.

The inorganic particles are, for example, preferably inorganic particles that result in a mixture containing 2 parts by mass of the inorganic particles relative to 100 parts by mass of the plate-like filler having a bulk density of 0.3 g/cm³ or more and a weight loss of 0.75% or less when held at 280°C for 80 minutes. Moreover, the inorganic particles preferably form a sol or a gel with a liquid such as water. Specifically, the inorganic particles may be alumina hydrate such as aluminum hydroxide gel or pseudoboehmite, transition alumina that is a crystal phase such as gamma phase, delta phase, theta phase, or chi phase, amorphous silica such as precipitated silica, silica sol, colloidal silica, or silica nanoparticles, a calcium compound such as calcium hydroxide, calcium oxide, or calcium carbonate, a magnesium compound such as magnesium hydroxide, magnesium oxide, or magnesium carbonate, a titanium-based compound such as titanium hydroxide or titanium oxide, or zirconium oxide. Of these inorganic particles, alumina hydrate such as aluminum hydroxide gel or pseudoboehmite and amorphous silica such as silica nanoparticles, in particular, are preferable. Moreover, two or more of these types of inorganic particles may be used as a mixture.

The stearic acid-based resin may be KAO WAX EB-FF^{®} (KAO WAX EB-FF is a registered trademark in Japan, other countries, or both) as ethylene bis(stearamide), for example.

The metal soap is preferably zinc stearate, which has the lowest water absorbency among metal soaps, and may be ZINC STEARATE S^{®} (ZINC STEARATE S is a registered trademark in Japan, other countries, or both) or the like.

One of these binders can be used individually, or two or more of these binders can be used in combination.

The paraffin wax is preferably paraffin wax having an initial decomposition temperature of 280°C or higher, and more preferably paraffin wax having an initial decomposition temperature of 300°C or higher. Although no specific limitations are placed on the upper limit for the initial decomposition temperature, the initial decomposition temperature can normally be 350°C or lower. When the initial decomposition temperature of the paraffin wax is not lower than any of the lower limits set forth above, there is little formation of air bubbles during heating of the composition, and the external appearance of obtained pellets can be further improved.

Of the examples described above, aluminum hydroxide gel and paraffin wax having an initial decomposition temperature of 300°C or higher are preferable as the binder from a viewpoint of further improving the external appearance of obtained pellets.

The proportion in which the binder is contained in the granular inorganic filler is preferably 0.5 parts by mass or more, and more preferably 1 part by mass or more per 100 parts by mass of the plate-like filler, and is preferably 10 parts by mass or less, and more preferably 5 parts by mass or less per 100 parts by mass of the plate-like filler.

A granulated product is not formed when this proportion is less than 0.5 parts by mass per 100 parts by mass of the plate-like filler, whereas there is a high tendency for water to adsorb due to the large specific surface area of inorganic particles, the amount of gas released during resin molding increases, and molding failure or reduction of performance may arise when this proportion is more than 5 parts by mass per 100 parts by mass of the plate-like filler. When the proportion in which the binder is contained in the granular inorganic filler is within any of the ranges set forth above, this enables good formation of the granular inorganic filler during production.

In a case in which the binder is inorganic particles, the weight loss of the granular inorganic filler in a 280°C nitrogen atmosphere can be reduced when the proportional content of the binder is not more than any of the upper limits set forth above. On the other hand, in a case in which the binder is paraffin wax, the weight loss of the granular inorganic filler in a 280°C nitrogen atmosphere can be reduced when the proportional content of the binder is not less than any of the lower limits set forth above.

Although the mechanism for this is not clear, it is presumed that by adopting a suitable additive amount range in a case in which the binder is inorganic particles, the specific surface area of the inorganic particles is reduced through granulation, only minimal adsorption of water arises, and the water content in the inorganic particles decreases, thereby resulting in reduction of the weight loss. Moreover, in a case in which the binder is paraffin wax, increasing the content of the paraffin wax and relatively reducing the amount of water contained in the plate-like filler, etc. results in reduction of the weight loss of the granular inorganic filler.

### <Optional components>

Examples of components that may optionally be contained in the resin composition in addition to the norbornene-based polymer and the granular inorganic filler include other additives such as fillers (other fillers) that do not correspond to the plate-like filler described above, antioxidants, anti-moisture agents, mold release agents, flame retardants, antibacterial agents, wood flour, coupling agents, plasticizers, colorants, lubricants, silicone oil, foaming agents, surfactants, thermoplastic elastomers, infrared absorbers, and light stabilizers without any specific limitations. One of these other components may be used individually, or two or more of these other components may be used in combination.

Note that another filler can have any form such as a particulate form or a needle form without any specific limitations so long as it is a form other than a plate-like form.

From a viewpoint of performing processing such as coloring of the resin composition and increasing fluidity of the resin composition, it is preferable that the resin composition contains a particulate filler.

The term "particulate filler" as used in the present specification refers to a filler having an aspect ratio of less than 13, as calculated as a ratio of maximum diameter relative to minimum diameter. The particulate filler does not have a function as a binder of the plate-like filler, and, in contrast to the binder that has an effect of coagulating the plate-like filler, the particulate filler functions by itself to cause coloring, improvement of resin fluidity, or the like.

The average aspect ratio of the particulate filler is preferably 5 or less, more preferably 3 or less, and even more preferably 2 or less. When the aspect ratio of the particulate filler is not more than any of the values set forth above, fluidity of the resin composition can be further increased. Moreover, the aspect ratio of the particulate filler is 1 or more, and may be more than 1.

The "average aspect ratio" of a particulate filler referred to in the present specification means the arithmetic mean diameter determined through observation using an electron microscope and, in more detail, can be measured by a method described in the EXAMPLES section.

Carbon-based particulate fillers and non-carbon-based particulate fillers can be used without any specific limitations as the particulate filler.

Examples of carbon-based particulate fillers include graphite such as artificial graphite, scaled graphite, flaked graphite, natural graphite, acid-treated graphite, expandable graphite, and expanded graphite; carbon black; and so forth.

Examples of non-carbon-based particulate fillers include titanium oxide, alumina, talc, calcium carbonate, zinc oxide, and so forth.

One of these particulate fillers can be used individually, or two or more of these particulate fillers can be used in combination.

Of the examples described above, carbon black and titanium oxide are preferable as the particulate filler from a viewpoint of increasing fluidity of the resin composition, and carbon black is more preferable. Carbon black is also useful when producing a shaped product that is colored black.

From a viewpoint of increasing fluidity of the resin composition, the average particle diameter of the particulate filler is preferably 0.01 µm or more, and more preferably 0.015 µm or more, and is preferably 0.1 µm or less, more preferably 0.08 µm or less, and even more preferably 0.07 µm or less.

Moreover, from a viewpoint of further increasing fluidity of the resin composition, a ratio of the average particle diameter of the particulate filler relative to the average particle diameter of the plate-like filler is preferably 1/10 or less, more preferably 1/20 or less, and even more preferably 1/50 or less.

The proportion in which the particulate filler is contained in the presently disclosed resin composition is not specifically limited and may be not less than 0 parts by mass and not more than 0.6 parts by mass when the total mass of the polymer and the granular inorganic filler is taken to be 100 parts by mass, for example. Note that from a viewpoint of achieving sufficient fluidity of the resin composition described above, the proportion in which the particulate filler is contained in the resin composition is preferably 0.05 parts by mass or more, and more preferably 0.3 parts by mass or more.

### (Production method of resin composition)

### <Preparation method of resin composition>

The presently disclosed resin composition can be prepared by a method including a step of kneading the above-described plate-like filler and binder to obtain a filler composition having a weight loss of 1.4% or less in a 280°C nitrogen atmosphere and a step of thoroughly mixing the norbornene-based polymer, the filler composition, and optional components that are used as necessary, for example, but is not specifically limited to being prepared by this method. Examples of such a method include a method in which a mixture of the above-described components is supplied into a melt-kneader, the norbornene-based polymer is placed in a molten state, and kneading is performed. Note that the resultant resin composition may be shaped into the form of pellets or the like by any method.

The types, proportions, and physical properties of substances that are kneaded are preferably in accordance with the description in the "Resin composition" section. Moreover, the filler composition is also referred to as a granular inorganic filler as previously mentioned in the "Filler composition" part of the "Resin composition" section.

By using a resin composition that is obtained by such a production method, it is possible to form a shaped product having excellent external appearance of pellets. Moreover, by kneading the plate-like filler and the binder to obtain a granular inorganic filler, it is possible to improve kneading efficiency of the filler with the polymer and improve productivity.

The kneading can be performed using a melt-kneader such as a single-screw extruder, a twin-screw extruder, a Banbury mixer, a kneader, a roll, or a Feeder Ruder, for example. The kneading temperature is preferably 200°C or higher, and more preferably 240°C or higher, and is preferably 400°C or lower, and more preferably 300°C or lower. Moreover, in the kneading, the components may be kneaded all at once, or the components may be kneaded while being added over multiple additions.

### (Shaped product)

The presently disclosed shaped product is obtained through shaping of the presently disclosed resin composition set forth above. In other words, a norbornene-based polymer, a filler composition, and optional components used as necessary that are contained in the presently disclosed shaped product are those that were previously described in the "Resin composition" section. Moreover, the relationship (content ratio) of contents of the norbornene-based polymer, the filler composition, and the optional components contained in the presently disclosed shaped product and also attributes thereof are normally the same as the relationship (content ratio) of contents and the attributes thereof in the resin composition.

Furthermore, the presently disclosed shaped product has little resin composition outgas, suppressed foaming at the surface of the shaped product, and excellent external appearance as a result of being formed from the presently disclosed resin composition set forth above.

The shaping method by which the presently disclosed shaped product is produced can be selected as appropriate from known shaping methods according to the desired shape of the shaped product without any specific limitations. Examples of such known shaping methods include extrusion molding, injection molding, inflation molding, blow molding, extrusion blow molding, injection blow molding, press forming, vacuum forming, powder slush molding, calendering, foam molding, and thermoforming. Of these examples, it is preferable to use injection molding as the shaping method.

In this shaping, it is possible to adopt a technique that involves setting the temperature of an inner surface of a mold cavity at the time of loading to a temperature at which the resin composition can undergo plastic deformation, initiating cooling at a timing from completion of loading to completion of pressure holding, and removing a product after sufficient cooling (heat and cool molding). By performing heat and cool molding, it is possible to reduce the arithmetic surface roughness Ra of the shaped product while also improving external appearance of the shaped product. As a result, particularly in a case in which a mirror is to be formed as a shaped product, it is possible to provide a high quality mirror.

### <Properties of shaped product>

The presently disclosed shaped product can have any shape in accordance with the application thereof. Moreover, the presently disclosed shaped product can have the following properties, for example.

### <<Linear expansion coefficient>>

TD and MD linear expansion coefficients of the shaped product are each preferably 40 ppm/K or less, more preferably 35 ppm/K or less, and even more preferably 32 ppm/K or less. A shaped product for which the MD and TD linear expansion coefficients are each not more than any of the values set forth above is preferable since it can be said to have excellent thermal dimensional stability. Note that the lower limit for the TD and MD linear expansion coefficients is not specifically limited and may be 1 ppm/K or more, for example.

A ratio of the MD linear expansion coefficient relative to the TD linear expansion coefficient of the shaped product is preferably 0.8 or more, and more preferably 0.9 or more, and is preferably 1.2 or less, and more preferably 1.0 or less. A shaped product for which a ratio of MD linear expansion coefficient/TD linear expansion coefficient is within any of the ranges set forth above is preferable since it has little anisotropy of thermal dimensional stability.

### <<Water absorption>>

The norbornene-based polymer contained in the resin composition that is used to produce the shaped product has excellent hydrophobicity, which results in the shaped product having good water absorption resistance. The water absorption of the presently disclosed shaped product after 24 hours of immersion in 23°C water as measured in accordance with ASTM D570 is preferably 0.05 mass% or less, more preferably 0.03 mass% or less, and even more preferably 0.01 mass% or less. A shaped product for which the water absorption described above is not more than any of the values set forth above is preferable since it has excellent water absorption resistance. Note that the lower limit for the water absorption is not specifically limited and may be 0.001 mass% or more, for example.

### <<Arithmetic surface roughness Ra>>

The arithmetic surface roughness Ra of the shaped product is preferably 10 nm or less, and more preferably 8 nm or less. A shaped product having an arithmetic surface roughness Ra that is not more than any of the values set forth above is preferable since it has excellent surface smoothness. Note that the lower limit for the arithmetic surface roughness Ra is not specifically limited and may be 1 nm or more, for example.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Various measurements and evaluations in the examples and comparative example were performed by the following methods.

### (Physical property measurements and evaluations)

### <Hydrogenation rate>

The hydrogenation rate in a hydrogenation reaction was calculated through ¹H-NMR measurement performed using deuterated chloroform as a solvent.

### <Molecular weight>

The number-average molecular weight (Mn) and the weight-average molecular weight (Mw) were measured as standard polyisoprene-equivalent values by gel permeation chromatography (GPC) with cyclohexane as a solvent. In addition, the molecular weight distribution (Mw/Mn) was calculated from these obtained values.

The GPC was performed using an HLC8120GPC produced by Tosoh Corporation.

The standard polyisoprene was standard polyisoprene produced by Tosoh Corporation for a total of 10 points corresponding to Mw = 602, 1,390, 3,920, 8,050, 13,800, 22,700, 58,800, 71,300, 109,000, and 280,000.

The measurement was performed using three columns (TSKgelG5000HXL, TSKgelG4000HXL, and TSKgelG2000HXL produced by Tosoh Corporation) connected in series as a column and under conditions of a flow rate of 1.0 mL/min, a sample injection volume of 100 µL, and a column temperature of 40°C.

### <Properties of plate-like filler>

A resin composition prepared in each example or comparative example was combusted at 550°C so as to remove a resin component. Thereafter, a solvent was added to the resultant ash content, a filler component was extracted, and then the extract was applied onto the surface of a substrate for observation in order to place the filler component in an observable state. Next, properties such as aspect ratio were confirmed using a scanning electron microscope (SEM) in order to determine whether or not each type of filler component was plate-like. For each of 50 randomly selected particles of a plate-like filler, the maximum diameter and thickness thereof were measured, and the aspect ratio was calculated. An arithmetic mean value of the maximum diameters of the 50 particles of the plate-like filler was taken to be the average particle diameter, and an arithmetic mean value of the aspect ratios of the 50 particles of the plate-like filler was taken to be the average aspect ratio.

### <Average particle diameter of particulate filler>

A resin composition prepared in each example or comparative example was combusted at 550°C so as to remove a resin component. Thereafter, a solvent was added to the resultant ash content, a particulate filler was extracted, and then the extract was applied onto the surface of a substrate for observation in order to place individual particles of the particulate filler in an observable state. The particle diameters of 50 randomly selected particles of the particulate filler were individually observed using a scanning electron microscope (SEM), a flat surface measurement tool was used to draw a circle with respect to an obtained image of each particle of the particulate filler, and a maximum value and a minimum value for the diameter of the drawn circle were measured by straight line measurement. An arithmetic mean value of the maximum value and the minimum value of the diameter was taken to be the particle diameter of the particulate filler, and an average value of the particle diameters of the 50 particles of the particulate filler was taken to be the average particle diameter of the particulate filler.

### <Initial decomposition temperature of binder>

The initial decomposition temperature of a binder component was measured using a thermogravimetric analyzer (produced by Hitachi High-Tech Science Corporation; product name: TA7000). Specifically, the measurement temperature was raised in an air atmosphere measurement environment, and the weight (W (g)) of the binder was measured. Based on the obtained data, a graph (thermogravimetric curve) was plotted with elapsed time from the start of measurement on a horizontal axis (X coordinate axis) and weight (W (g)) of the binder on a vertical axis (Y coordinate axis). The temperature at which weight loss reached 5% relative to the initial weight of the binder was taken to be the initial decomposition temperature.

### <Weight loss>

The weight loss of a granular inorganic filler in a 280°C nitrogen atmosphere was measured using a thermogravimetric analyzer (produced by Hitachi High-Tech Science Corporation; product name: TA7000). Specifically, 5 mg of a sample was weighed into an oven pan, the sample was held at a measurement temperature of 280°C for 60 minutes in a nitrogen atmosphere measurement environment, and the weight (W (g)) of the granular inorganic filler was measured. With a short holding time of 20 minutes or less at 280°C, it is not possible to obtain an accurate value since there is significant variation. Although the holding time is not necessarily limited to 60 minutes depending on the substance and the content, a time that is sufficient for the weight loss to reach a constant value is preferable. The weight loss (TG (%)) of the granular inorganic filler in a 280°C nitrogen atmosphere was calculated from the following formula (1) based on the obtained data. $TG \left(%\right) = \left\{\left({W}_{280}-{W}_{0}\right)/{W}_{0}\right\} \times 100$ (1) [In formula (1), W₀ is the weight (g) of the granular inorganic filler prior to thermogravimetric analysis measurement, and W₂₈₀ is the weight (g) of the granular inorganic filler after a specific time has elapsed at 280°C.]

### <Linear expansion coefficient>

A test specimen of 10 cm in length by 5 cm in width by 5 cm in thickness was cut out from a shaped product produced in each example or comparative example such that the length of 10 cm corresponded to TD, and then the linear expansion coefficient (ppm/K) stipulated in ASTM E831 was measured. This measurement was performed three times in total, and an average value of these measurements was taken to be the TD linear expansion coefficient.

A test specimen of 10 cm in length by 5 cm in width by 5 cm in thickness was cut out from a shaped product produced in each example or comparative example such that the length of 10 cm corresponded to MD, and then the linear expansion coefficient (ppm/K) stipulated in ASTM E831 was measured. This measurement was performed three times in total, and an average value of these measurements was taken to be the MD linear expansion coefficient.

In addition, a ratio of the MD linear expansion coefficient relative to the TD linear expansion coefficient was calculated.

### <Water absorption>

The water absorption after 24 hours of immersion in 23°C water was measured in accordance with ASTM D570 for a shaped product produced in each example or comparative example.

### <Arithmetic surface roughness Ra>

A 3D optical profiler (NewView^{®} (NewView is a registered trademark in Japan, other countries, or both) series produced by Zygo Corporation) was used to measure the arithmetic surface roughness Ra of a shaped product produced in each example or comparative example. The measurement magnification was adjusted such that the measurement viewing field was 1.82 mm × 1.36 mm, five arbitrary positions near the center of the measurement sample were measured, and an average value of these measurements was taken to be the arithmetic surface roughness Ra. An evaluation was made by the following standard.

Note that in a case in which the four corners in a measurement result 3D image were not flat (i.e., irregularities were larger than in a central section), that result was excluded when determining the average value. Moreover, analysis was performed in Cylinder Mode in order to correct large undulation of the surface.
A+: Arithmetic surface roughness Ra of 10 nm or less
A: Arithmetic surface roughness Ra of more than 10 nm

### <External appearance of pellets>

A pelletized resin composition produced in each example or comparative example was visually inspected, and the external appearance of the pellets was judged according to the following standard.
A: Shape and appearance not differing from pellets without filler are maintained
B: Lumps observed at surface but shape not differing from pellets without filler is maintained
C: Lumps observed at surface and edges of pellet shape are chipped
D: Pellets are brittle and shape thereof cannot be maintained

### <Releasability>

A pelletized resin composition was heated and dried at 80°C for 4 hours, was then loaded into an injection molding machine (produced by FANUC Corporation; product name: ROBOSHOT α-100B), and was injection molded at a cylinder temperature of 270°C and a mold temperature of 135°C to obtain a shaped product having a flat plate shape of 90 mm × 55 mm × 5 mm. This operation was repeated continuously. In a situation in which sticking of a shaped product to the mold occurred twice or more in succession during mold opening, release failure was judged to have occurred, and the number of times molding had been performed was recorded.
A: Sticking arises after molding 300 times or more
B: Sticking arises after molding not less than 100 times and less than 300 times
C: Sticking arises after molding not less than 50 times and less than 100 times
D: Sticking arises after molding less than 50 times

### (Example 1)

### <Preparation of resin composition>

A soil mixer (model no.: KS-54; produced by Kansai Kiki Seisakusho) was charged with 100 g of boehmite (BMF-520 produced by Kawai Lime Industry Co., Ltd.; average aspect ratio: 20; average particle diameter: 5 µm) as a plate-like filler, and the boehmite was stirred at 70 rpm while spraying 80 g of a water suspension containing 3.8 parts by weight of paraffin wax (HICALL^{®} K-350 produced by Kaneda Co., Ltd.; initial decomposition temperature: 293°C) as a binder. The resultant mixture was dried at 120°C to produce a granular inorganic filler containing 3 parts by weight of paraffin wax. The weight loss of this granular inorganic filler was measured by the previously described method.

Thereafter, 60 parts of a COP (ZEONOR^{®} 1420R (ZEONOR is a registered trademark in Japan, other countries, or both) produced by Zeon Corporation) as a norbornene-based polymer and 40 parts of the granular inorganic filler were mixed and were subsequently kneaded using a kneader (produced by Shibaura Machine Co., Ltd.; product name: TEM-37) under conditions of 280°C and 150 rpm to yield a pelletized resin composition.

Note that in the examples and comparative example, the properties (average aspect ratio, average particle diameter, etc.) of each type of filler in the resin composition were the same as the properties of that filler at the time of charging.

### <Production of shaped product>

The pelletized resin composition was heated and dried at 80°C for 4 hours, was then loaded into an injection molding machine (produced by FANUC Corporation; product name: ROBOSHOT α-100B), and was injection molded at a cylinder temperature of 270°C and a mold temperature of 135°C to obtain a shaped product having a flat plate shape of 90 mm × 55 mm × 5 mm. Various measurements and evaluations were performed for this shaped product by the previously described methods. The results are shown in Table 1.

### (Examples 2 to 7 and 12 to 14, and Comparative Example 1)

Various operations, measurements, and evaluations were performed in the same way as in Example 1 with the exception that the types and amounts of a norbornene-based polymer, a plate-like filler, a binder, and a particulate filler were changed as indicated in Tables 1 and 2. The particulate filler was added and mixed during mixing of the norbornene-based polymer with the granular inorganic filler and was subsequently kneaded. The results are shown in Tables 1 and 2.

### (Example 8)

### <Preparation of resin composition>

A soil mixer (model no.: KS-54; produced by Kansai Kiki Seisakusho) was charged with 100 g of boehmite (BMF-520 produced by Kawai Lime Industry Co., Ltd.; average aspect ratio: 20; average particle diameter: 5 µm) as a plate-like filler, and the boehmite was stirred at 70 rpm while spraying 120 g of a water suspension (solid content concentration: 1.7 parts by weight; D50 of solid content: 120 nm) in which aluminum hydroxide gel (specific surface area: 64 m²/g; average particle diameter: 19 µm; aluminum oxide content: 53%; mass loss on drying: 16%) was dispersed as a binder. The resultant mixture was dried at 120°C to produce a granular inorganic filler containing 2 parts by weight of aluminum hydroxide gel. The weight loss of this granular inorganic filler was measured by the previously described method.

Thereafter, 60 parts of a COP (ZEONOR^{®} 1420R produced by Zeon Corporation) as a norbornene-based polymer and 40 parts of the granular inorganic filler were mixed and were subsequently kneaded using a kneader (produced by Shibaura Machine Co., Ltd.; product name: TEM-37) under conditions of 280°C and 150 rpm to yield a pelletized resin composition.

Note that in the examples, the properties (average aspect ratio, average particle diameter, etc.) of each type of filler in the resin composition were the same as the properties of that filler at the time of charging.

### <Production of shaped product>

The pelletized resin composition was heated and dried at 80°C for 4 hours, was then loaded into an injection molding machine (produced by FANUC Corporation; product name: ROBOSHOT α-100B), and was injection molded at a cylinder temperature of 270°C and a mold temperature of 135°C to obtain a shaped product having a flat plate shape of 90 mm × 55 mm × 5 mm. Various measurements and evaluations were performed for this shaped product by the previously described methods. The results are shown in Table 2.

### (Examples 9 to 11)

Various operations, measurements, and evaluations were performed in the same way as in Example 8 with the exception that the types and amounts of a plate-like filler, a binder, and a particulate filler were changed as indicated in Table 2. The particulate filler was added and mixed during mixing of the norbornene-based polymer with the granular inorganic filler and was subsequently kneaded. The results are shown in Table 2.

In Tables 1 and 2, shown below:
"COC" indicates APEL^{®} (APEL is a registered trademark in Japan, other countries, or both) produced by Mitsui Chemicals, Inc.;
"LUVAX-2191" indicates LUVAX^{®}-2191 produced by Nippon Seiro Co., Ltd. (initial decomposition temperature: 315°C);
"Aluminum hydroxide gel" indicates aluminum hydroxide gel having a specific surface area of 64 m²/g, an average particle diameter of 19 µm, an aluminum oxide content of 53%, and a mass loss on drying of 16%;
"Polymethyl methacrylate" indicates ARON^{®} AS-1800 (ARON is a registered trademark in Japan, other countries, or both) produced by Toagosei Co., Ltd.;
"UNISTER H-476" indicates UNISTER^{®} H-476 (UNISTER is a registered trademark in Japan, other countries, or both) produced by NOF Corporation;
"Polypropylene" indicates EXCELLEN^{®} (EXCELLEN is a registered trademark in Japan, other countries, or both) produced by Sumitomo Chemical Co., Ltd.; and
"CB" indicates carbon black product no. CB#650B produced by Mitsubishi Chemical Corporation.

**[Table 1]**

| | | | | Units | Example 1 | Example 2 | Example 3 | Example 4 | Example 5 | Example 6 | Example 7 |
|---|---|---|---|---|---|---|---|---|---|---|---|
| Resin composition | Norbornene-based polymer | | Type | - | COP | COC | COP | COP | COP | COP | COP |
| | | | Product name | - | 1420R | APEL | 1420R | 1420R | 1420R | 1420R | 1420R |
| | | | Parts by weight | - | 60 | 60 | 60 | 60 | 60 | 60 | 60 |
| | Granular inorganic filler | Plate-like filler | Type | - | Boehmite | Boehmite | Boehmite | Boehmite | Boehmite | Boehmite | Boehmite |
| | | | Product name | - | BMF-520 | BMF-520 | BMF-520 | BMF-520 | BMF-520 | BMF-520 | BMF-520 |
| | | | Aspect ratio | - | 20 | 20 | 20 | 20 | 20 | 20 | 20 |
| | | | Particle diameter | µm | 5 | 5 | 5 | 5 | 5 | 5 | 5 |
| | | | Parts by weight relative to 100 parts by mass of granular inorganic filler | - | 98 | 98 | 95 | 98 | 97 | 95 | 95 |
| | | Binder | Tvpe | - | Paraffin wax | Paraffin wax | Paraffin wax | Paraffin wax | Paraffin wax | Paraffin wax | Paraffin wax |
| | | | Product name | - | HICALL K-350 | HICALL K-350 | HICALL K-350 | LUVAX-2191 | LUVAX-2191 | LUVAX-2191 | LUVAX-2191 |
| | | | Parts by weight relative to 100 parts by mass of plate-like filler | - | 2 | 2 | 5 | 2 | 3 | 5 | 5 |
| | | | Parts bv weight | - | 40 | 40 | 40 | 40 | 40 | 40 | 40 |
| | Particulate filler | | Tvpe | - | - | - | - | - | - | - | CB |
| | | | Particle diameter | µm | - | - | - | - | - | - | 0.022 |
| | | | Parts by weight | - | - | - | - | - | - | - | 0.3 |
| Physical property (granular inorganic filler) | Weight loss (in 280°C nitrogen atmosphere) | | | % | 0.68 | 0.68 | 0.68 | 0.59 | 0.54 | 0.47 | 0.48 |
| Physical properties (shaped product) | Feasibilitv of shaping | | | - | Yes | Yes | Yes | Yes | Yes | Yes | Yes |
| | Linear expansion coefficient (MD) | | | ppm | 31 | 28 | 29 | 32 | 29 | 30 | 30 |
| | Linear expansion coefficient (TD) | | | ppm | 30 | 30 | 28 | 29 | 31 | 32 | 32 |
| | Linear expansion coefficient ratio (MD/TD) | | | - | 1.0 | 0.9 | 1.0 | 1.1 | 0.9 | 0.9 | 0.9 |
| | Water absorption | | | % | 0.007 | 0.007 | 0.008 | 0.007 | 0.007 | 0.008 | 0.008 |
| | Evaluation of arithmetic surface roughness Ra | | | - | A+ | A+ | A+ | A+ | A+ | A+ | A+ |
| Evaluation | External appearance of pellets | | | - | B | B | B | A | A | A | A |
| | Releasability of shaped product | | | - | B | B | B | A | A | A | A |

**[Table 2]**

| | | | | Units | Example 8 | Example 9 | Example 10 | Example 11 | Example 12 | Example 13 | Example 14 | Comparative Example 1 |
|---|---|---|---|---|---|---|---|---|---|---|---|---|
| Resin composition | Norbomene-based polymer | | Type | - | COP | COP | COP | COP | COP | COP | COP | COP |
| | | | Product name | - | 1420R | 1420R | 1420R | 1420R | 1420R | 1420R | 1420R | 1420R |
| | | | Parts bv weight | - | 60 | 60 | 60 | 60 | 60 | 60 | 95 | 60 |
| | Granular inorganic filler | Plate-like filler | Type | - | Boehmite | Boehmite | Boehmite | Boehmite | Boehmite | Boehmite | Boehmite | Boehmite |
| | | | Product name | - | BMF-520 | BMF-520 | BMF-520 | BMF-520 | BMF-520 | BMF-520 | BMF-520 | BMF-520 |
| | | | Aspect ratio | - | 20 | 20 | 20 | 20 | 20 | 20 | 20 | 20 |
| | | | Particle diameter | µm | 5 | 5 | 5 | 5 | 5 | 5 | 5 | 5 |
| | | | Parts by weight relative to 100 parts by mass of granular inorganic filler | - | 98 | 98 | 98 | 95 | 98 | 98 | 98 | 95 |
| | | Binder | Type | - | Inorganic particles | Inorganic particles | Inorganic particles | Inorganic particles | Polyacrylic acid-based resin | Stearic acid-based resin | Paraffin wax | Polyacrylic acid-based resin |
| | | | Product name | - | Aluminum hydroxide gel | Aluminum hydroxide gel | Aluminum hydroxide gel | Aluminum hydroxide gel | Polymethyl methacrylate | UNISTER H-476 | HICALL K-350 | Polymethyl methacrylate |
| | | | Parts by weight relative to 100 parts bv mass of plate-like filler | - | 2 | 2 | 2 | 5 | 2 | 2 | 2 | 5 |
| | | | Parts bv weight | - | 40 | 40 | 40 | 40 | 40 | 40 | 5 | 40 |
| | Particulate filler | | Type | - | - | CB | CB | - | - | - | - | - |
| | | | Particle diameter | µm | - | 0.022 | 0.022 | - | - | - | - | - |
| | | | Parts by weight | - | - | 0.6 | 0.3 | - | - | - | - | - |
| Physical property (granular inorganic filler) | Weight loss (in 280°C nitrogen atmosphere) | | | % | 0.64 | 0.64 | 0.64 | 0.74 | 0.98 | 0.88 | 0.68 | 1.5 |
| Physical properties (shaped product) | Feasibilitv of shaping | | | - | Yes | Yes | Yes | Yes | Yes | Yes | Yes | Yes |
| | Linear expansion coefficient (MD) | | | ppm | 31 | 32 | 30 | 30 | 32 | 30 | 60 | 29 |
| | Linear expansion coefficient (TD) | | | ppm | 31 | 31 | 31 | 29 | 30 | 31 | 56 | 29 |
| | Linear expansion coefficient ratio (MD/TD) | | | - | 1.0 | 1.0 | 1.0 | 1.0 | 1.1 | 1.0 | 1.1 | 1.0 |
| | Water absorption | | | % | 0.005 | 0.006 | 0.006 | 0.006 | 0.02 | 0.015 | 0.008 | 0.02 |
| | Evaluation of arithmetic surface roughness Ra | | | - | A+ | A+ | A+ | A+ | A+ | A+ | A+ | A+ |
| Evaluation | External appearance of pellets | | | - | A | A | A | B | C | C | B | D |
| | Releasability of shaped product | | | - | A | A | A | B | D | D | B | D |

It can be seen from Tables 1 and 2 that it is possible to produce pellets having excellent external appearance in Examples 1 to 14 in which the used resin composition contains a norbornene-based polymer and a filler composition (granular inorganic filler) and in which the filler composition contains a plate-like filler and a binder and has a weight loss of 1.4% or less in a 280°C nitrogen atmosphere.

### INDUSTRIAL APPLICABILITY

According to the present disclosure, it is possible to provide a resin composition having excellent external appearance of produced pellets, a shaped product obtained using this resin composition, and a method of producing this resin composition.

## Claims

1. A resin composition comprising:
a polymer including a structural unit derived from a norbornene-based monomer; and
a filler composition, wherein
the filler composition contains a plate-like filler and a binder and has a weight loss of 1.4% or less in a 280°C nitrogen atmosphere.

2. The resin composition according to claim 1, wherein the filler composition is a granular inorganic filler.

3. The resin composition according to claim 2, wherein the binder includes at least one of paraffin wax and inorganic particles.

4. The resin composition according to claim 2, wherein the plate-like filler includes at least one of boehmite and mica.

5. The resin composition according to claim 2, wherein content of the granular inorganic filler is not less than 10 parts by mass and not more than 60 parts by mass when total mass of the polymer and the granular inorganic filler is taken to be 100 parts by mass.

6. The resin composition according to claim 2, further comprising a particulate filler.

7. The resin composition according to claim 6, wherein a ratio of an average particle diameter of the particulate filler relative to an average particle diameter of the plate-like filler is 1/10 or less.

8. A shaped product obtained through shaping of the resin composition according to any one of claims 1 to 7.

9. The shaped product according to claim 8, wherein an MD linear expansion coefficient and a TD linear expansion coefficient of the shaped product are each 40 ppm/K or less.

10. The shaped product according to claim 8, wherein a ratio of an MD linear expansion coefficient relative to a TD linear expansion coefficient of the shaped product is not less than 0.8 and not more than 1.2.

11. The shaped product according to claim 8, wherein water absorption of the shaped product after 24 hours of immersion in 23°C water as measured in accordance with ASTM D570 is 0.05 mass% or less.

12. The shaped product according to claim 8, wherein the shaped product has an arithmetic surface roughness Ra of 10 nm or less.

13. The shaped product according to claim 8, wherein the shaped product is for a mirror.

14. A method of producing a resin composition comprising:
kneading a plate-like filler and a binder to obtain a filler composition having a weight loss of 1.4% or less in a 280°C nitrogen atmosphere; and
kneading a polymer including a structural unit derived from a norbornene-based monomer and the filler composition.

15. The method of producing a resin composition according to claim 14, wherein the filler composition is a granular inorganic filler.

16. The method of producing a resin composition according to claim 15, wherein the binder includes at least one of paraffin wax and inorganic particles.

17. The method of producing a resin composition according to claim 15, wherein the plate-like filler includes at least one of boehmite and mica.
